# NEUE EUROPÄISCHE PATENTSCHRIFT

(11) **EP 3 121 495 B2**
(45) Veröffentlichungstag und Bekanntmachung des Hinweises auf die Entscheidung über den Einspruch: **10.11.2021**
(45) Hinweis auf die Patenterteilung: 03.10.2018
(21) Anmeldenummer: 16179446.6
(22) Anmeldetag: 14.07.2016
(51) Int. Cl.: F16K 31/06, H01F 7/13, H01F 7/16, H01F 7/18, F16F 9/34

(54) **ELEKTROMAGNETISCH BETÄTIGTES SCHALTVENTIL**
ELECTROMAGNETICALLY ACTUATED SWITCHING VALVE
VANNE DE COMMANDE ELECTROMAGNETIQUE

(30) Priorität: 16.07.2015 DE 102015111561
(43) Veröffentlichungstag der Anmeldung: 25.01.2017
(73) Patentinhaber: RAPA Automotive GmbH & Co. KG, 95100 Selb (DE)
(72) Erfinder: Schlick, Matthias, 08606 Oelsnitz/V. (DE); Clauß, Sebastian, 98693 Ilmenau (DE); Stock, Johannes, 92681 Erbendorf (DE); Hudec, Julius, 35201 As (CZ)
(74) Vertreter: Klunker IP Patentanwälte PartG mbB

(56) Entgegenhaltungen:
- EP-A1- 2 910 828
- DE-A1-102011 052 526
- DE-A1-102011 078 102
- DE-A1-102011 116 872
- US-A1- 2014 238 354
- US-A1- 2014 240 886

## Beschreibung

Die vorliegende Erfindung betrifft ein elektromagnetisch betätigtes Schaltventil nach dem Oberbegriff des Anspruchs 1, wie es zum Beispiel in Kraftfahrzeugluftfedersystemen Anwendung findet.

Ein solches Ventil besteht im Wesentlichen aus einer elektrisch bestrombaren Spule und einem dazugehörigen Eisenkreis, in welchem bei elektrischer Bestromung der Spule ein Magnetfeld induziert wird. Der Eisenkreis bzw. magnetische Kreis umfasst einerseits ein beweglich gelagertes Bauteil, den Magnetanker, und andererseits ein ortsfestes Bauteil oder eine ortsfeste Baugruppe, auch als Mantel bezeichnet, mit einem geringfügig vom Magnetanker beabstandeten Polteil. Der Abstand zwischen Magnetanker und Polteil definiert einen Arbeitsluftspalt. Bei Fließen eines ausreichend großen elektrischen Stroms durch die Spule führt der Magnetanker in Folge des induzierten Magnetfeldes in eine Relativbewegung über den Arbeitsluftspalt in Richtung auf das Polteil aus. Diese Relativbewegung wird genutzt, um direkt oder über am Magnetanker angekoppelte Bauteile Durchflussöffnungen im Ventil zu sperren oder frei zu geben, das heißt zwischen zwei Zuständen "geöffnet" und "geschlossen" zu schalten. Zum Sperren dient typischerweise ein elastisches Dichtelement, insbesondere ein Elastomerdichtelement, welches beim Sperren der Durchflussöffnung auf einen gegenüberliegenden Dichtsitz drückt und beim Freigeben der Durchflussöffnung von diesem wieder abhebt. Um ein magnetisches Kleben des Magnetankers am Polteil zu vermeiden, wenn das Elastomerdichtelement am Dichtsitz anliegt, verbleibt zwischen dem Magnetanker und dem Polteil ein Restluftspalt, der sogenannte "Remanenzspalt".

Bei den bekannten Ventilen wird eine erste, neutrale Schaltstellung des Dichtelements durch eine mechanische Kraftkomponente im Ventil sichergestellt. Dazu dient in der Regel ein Federelement. Diese neutrale Schaltstellung wird im Folgenden als "Ausgangslage" des Magnetankers bezeichnet. In die zweite Schaltstellung wird das Dichtelement in Folge permanenter Bestromung der Spule geschaltet, wobei die dadurch erzeugte Magnetkraft entgegen der mechanischen Kraftkomponente bzw. entgegen der Federkraft wirkt und diese überwindet. Diese zweite Schaltstellung wird nachfolgend als "Endlage" des Magnetankers bezeichnet. Die Bewegung des Magnetankers aus seiner Ausgangslage in seine Endlage definiert den "Hub", wobei in der Regel das Anliegen des Dichtelements am Dichtsitz den Hubanschlag definiert und damit gleichzeitig die Endlage für den Magnetanker. Sobald die elektrische Bestromung der Spule aufgehoben wird, bewirkt die Federkraft eine Rückwärtsbewegung des Magnetankers in seine Ausgangslage und damit eine Rückstellung des Dichtelements in die erste Schaltstellung.

Derartige Ventile werden in Luftfedersystemen von Kraftfahrzeugen in verschiedener Weise und für verschiedene Funktionen angewendet. Es existieren beispielsweise Ventile zum Befüllen und Entleeren der Luftfederbälge, Ventile zum Zuschalten oder Sperren von Speichern im System, sowie Ventile, über welche die Balgvolumen mit Zusatzvolumen bei Bedarf verbunden werden können.

DE 10 2011 078102 A1 schlägt im Zusammenhang mit einem derartigen elektromagnetisch betätigten Sitzventil vor, die von dem Ventil in der Schließposition erzeugten Geräusche, welche aufgrund einer PWM-Signal-Ansteuerung auftreten, zu reduzieren, indem ein zusätzlicher Anschlag für den Magnetanker vorgesehen wird, gegen den der Magnetanker mittelbar oder unmittelbar anliegt, solange sich das Dichtelement in der Schließposition befindet.

Weitere Geräusche, die auch im Fahrzeuginnenraum wahrnehmbar werden, entstehen funktionsbedingt, wenn der Magnetanker seine Endlage erreicht, beispielsweise wenn der Dichtstößel auf den Dichtsitz und/oder der Magnetanker auf den zusätzlichen Anschlag aufprallen. Entsprechende Geräusche entstehen auch, wenn der Magnetanker in seine Ausgangslage zurückbewegt wird. Zur Reduzierung dieser Schaltgeräusche werden Dämpfnoppen am Magnetanker und/oder am Dichtsitz angebracht oder das Ventil wird akustisch gegenüber angrenzenden Baugruppen entkoppelt.

Dokument EP 2 910 828 A1 ist nach dem beanspruchten Prioritätsdatum der vorliegenden Anmeldung veröffentlicht. Es offenbart ein elektromagnetisches Ventil mit einem Magnetanker, dessen Bewegung von einer Spule gesteuert wird. Während eines Hubs des Magnetankers wird die Spule mit einer konstanten Stromstärke bestromt.

Dokumente US 2014/0240886 A1 und US 2014/0238354 A1 offenbaren jeweils eine Kraftstoffeinspritz-Steuervorrichtung für eine Verbrennungskraftmaschine. Die Durchflussöffnungen der Kraftstoffdüsen weisen einen kegelartigen Ventilsitzflächenverlauf auf, der in Verbindung mit einem kugel- oder kegelartig ausgebildeten Verschlusselement dichtend wirkt.

Aufgabe der vorliegenden Erfindung ist es, alternative oder ergänzende Maßnahmen zur Geräuschreduzierung beim Erreichen der Ausgangs- und/oder Endlage des Magnetankers vorzuschlagen.
Diese Aufgabe wird durch ein elektromagnetisch betätigtes Schaltventil mit den Merkmalen des unabhängigen Anspruchs 1 gelöst. In davon abhängigen Ansprüchen sind vorteilhafte Ausgestaltungen und Weiterbildungen der Erfindung angegeben.
Gemäß einer bevorzugten Ausführungsform umfasst der Magnetantrieb des elektromagnetischen Schaltventils in herkömmlicher Weise eine Magnetspule und einen magnetischen Kreis mit einem ortsfesten Mantel und einem in Richtung auf den Pol des ortsfesten Mantels bewegbaren Magnetanker, sowie eine Steuerung mit der die Höhe der Bestromung der Magnetspule steuerbar ist. Dabei ist nun vorgesehen, den Magnetantrieb so auszubilden, dass er eine Magnetkraft-Hub-Kennlinie besitzt, die ausgehend von der Ausgangslage des Magnetankers bis hin zur Endlage des Magnetankers insgesamt steigend ist, das heißt die Magnetkraft ist in der Endlage des Magnetankers größer als in der Ausgangslage. Darüber hinaus ist die Steuerung zur Bestromung der Magnetspule so eingerichtet, dass die Bestromung der Spule während der Bewegung des Magnetankers zwischen seiner Ausgangslage und seiner Endlage erhöht und/ oder reduziert wird.

Im Unterschied zum vorbeschriebenen Stand der Technik wird die Magnetspule also nicht schlagartig mit einem fest vorgegebenen, gleichbleibenden Strom beaufschlagt, sondern die Bestromung der Spule wird während der Bewegung des Magnetankers verändert, nämlich erhöht, wenn der Magnetanker von seiner Ausgangslage in seine Endlage bewegt wird, und vorzugsweise reduziert, wenn der Magnetanker, beispielsweise aufgrund von Federkräften, von seiner Endlage in seine Ausgangslage bewegtwird. Diese Stromänderung erfolgt kontinuierlich, bevorzugt linear, kann aber insbesondere unter Berücksichtigung des Verlaufs der Magnetkraft-Hub-Kennlinie auch progressiv, degressiv oder unregelmäßig erfolgen.

In Kombination mit dem Umstand, dass die Magnetkraft-Hub-Kennlinie des Magnetantriebs insgesamt steigt, vorzugsweise kontinuierlich steigt, ergeben sich aufgrund des gewählten zeitlichen Bestromungsverlaufs geräuschmindernde Effekte, wenn der Magnetanker seine Endlage erreicht und wenn der Magnetanker wieder seine Ausgangslage erreicht. Denn im Ergebnis wird durch die vorgeschlagene Maßnahme im Vergleich zu einem Magnetantrieb, der bei gleicher Magnetkraft-Hub-Kennlinie schlagartig mit der maximalen Bestromung beaufschlagt wird, die Geschwindigkeit und damit die kinetische Energie reduziert, mit der der Magnetanker und die mit dem Magnetanker gekoppelte Baugruppe gegen den Anschlag prallt, der die Endlage bzw. die Ausgangslage des Magnetankers festlegt. Dies liegt daran, dass der Magnetanker aufgrund der anfänglich geringeren Bestromung zunächst mit geringer Kraft beschleunigt wird. Über den gesamten Hub wird somit vergleichsweise wenig kinetische Energie in der Magnetankerbaugruppe aufgebaut, dementsprechend gering ist dann das Aufprallgeräusch beim Erreichen der Endlage. Aufgrund des weiteren Umstands, dass die Magnetkraft-Hub-Kennlinie ausgehend von der Ausgangslage des Magnetankers bis hin zur Endlage des Magnetankers insgesamt steigt, kann bei Erreichen der Endlage bereits eine hohe Magnetkraft erzielt werden. Die Kraft, mit der das Dichtelement die Durchflussöffnung des Schaltventils verschließt, addiert sich dann zur Summe aus der Magnetkraft und der relativ geringen kinetischen Energie der dem Magnetanker zugehörigen beweglichen Baugruppe abzüglich einer etwaigen entgegenwirkenden Federkraft.

Nach Erreichen der Endlage ist es vorteilhaft, die Bestromung der Spule weiter zu erhöhen und vorzugsweise über einen vorgegebenen Zeitraum auf dem erhöhten Niveau zu halten, um ein dichtes Verschließen des Dichtsitzes auch für den Fall zu gewährleisten, dass das Dichtelement in unmittelbarem Anschluss an das Einfahren des Dichtelements in den Dichtsitz in Schwingung gerät. Derartige Schwingungen ergeben sich insbesondere daraus, dass der Dichtsitz des Schaltventils vorzugsweise elastisch ausgeführt ist.

Später kann die Bestromung der Spule auf einen unter dem Maximalwert liegenden Wert gesenkt werden, der ausreichend hoch ist, um sicherzustellen, dass der Magnetanker in seiner Endlage verharrt. Um die Höhe dieser Bestromung unabhängig von einem auf das Dichtelement axial wirkenden Fluiddruck zu machen, ist das Schaltventil vorzugsweise als druckausgeglichenes Schaltventil konstruiert. Bei solchen Ventilen wird der axial auf einer Vorderseite des Dichtelements anliegende Druck auf die axial gegenüberliegende Rückseite geleitet.

Die vorbeschriebenen Vorteile werden weiter gefördert, wenn die Magnetkraft-Hub-Kennlinie vor Erreichen der Endlage des Magnetankers progressiv ansteigt. Der progressive Anstieg in der Endphase der Ankerbewegung bewirkt einerseits, dass die höchsten Beschleunigungskräfte auf den Magnetanker nur über einen letzten, kurzen Zeitraum wirken, so dass die kinetische Energie der dem Magnetanker zugeordneten Baugruppe bei Erreichen der Endlage relativ gering ist. Andererseits ist die durch die Magnetkraft erzeugte Schließkraft des Ventils aufgrund des progressiven Anstiegs der Magnetkraft-Hub-Kennlinie bei Erreichen der Endlage relativ hoch. Ein weiterer Vorteil ergibt sich im Zusammenhang mit der weiteren Erhöhung der Bestromung nach Erreichen der Endlage und dem anschließenden Halten der Bestromung auf reduziertem Niveau. Denn aufgrund der progressiv ansteigenden Magnetkraft-Hub-Kennlinie kann bereits durch geringfügiges weiteres Erhöhen der Bestromung eine sehr große Magnetkraft und dementsprechend Schließkraft des Ventils erreicht werden. Aus demselben Grund kann das Ventil mit relativ geringer Bestromung anschließend in Schließstellung gehalten werden, weil trotz der geringen Bestromung eine hohe Magnetkraft erzielt wird.

Besonders bevorzugt ist es, wenn die Magnetkraft-Hub-Kennlinie von der Ausgangslage bis hin zur Endlage des Magnetankers einen proportionalen, vorzugsweise horizontalen, Verlauf, gefolgt von dem vorgenannten progressiven Verlauf aufweist. Dadurch wird erreicht, dass die Beschleunigung der dem Magnetanker zugehörigen Baugruppe über weite Bereiche der Bewegung des Magnetankers zunächst gering ist und allenfalls langsam steigt, so dass die kinetische Energie dieser Baugruppe bei Erreichen der Endlage entsprechend gering ist. Darüber hinaus fällt dann der progressive Verlauf der Magnetkraft-Hub-Kennlinie vor Erreichen der Endlage um so steiler aus, so dass wiederum nach Erreichen der Endlage durch geringfügiges weiteres Erhöhen der Bestromung sehr hohe Magnetkräfte und damit sehr hohe Schließkräfte des Ventils erreichbar sind. Der Magnetantrieb kann dementsprechend für relativ geringe Leistungen mit entsprechend geringer Baugröße ausgelegt werden.

Der proportionale Verlauf der Magnetkraft-Hub-Kennlinie erstreckt sich aus den vorgenannten Gründen möglichst weit, vorzugsweise über mindestens 50 % des Hubs. Insbesondere ist es bevorzugt, wenn die Magnetkraft im Bereich des proportionalen Verlaufs der Magnetkraft-Hub-Kennlinie möglichst konstant ist und sich vorzugsweise um nur maximal 20 % ändert.

Eine Magnetkraft-Hub-Kennlinie mit einem proportionalen Verlauf gefolgt von einem progressiven Verlauf in Richtung auf die Endlage des Magnetankers lässt sich erzielen, wenn das Polteil des ortsfesten Mantels eine zylindrische, topfartige Stufe aufweist, in die der Magnetanker mit einem axialen Zapfen eintaucht, wobei der axiale Zapfen seinerseits vorzugsweise ebenfalls zylindrisch ist. Im Rahmen der vorliegenden Erfindung gilt eine Konizität der Stufe des Polteils und/oder des axialen Zapfens des Magnetankers bis zu einer Abweichung von 10° zur Zylinderachse noch als zylindrisch, wobei die Konizität vorzugweise unter 10°, besonders bevorzugt unter 5° liegt. Alternativ können der Zapfen Teil des Polteils und der Topf bzw. die Stufe Teil des Magnetankers sein, was zu ähnlichen Ergebnissen führt. Eine geeignete Ausführung sieht vor, dass die Stufe bzw. der Topf des Polteils (oder des Magnetankers) eine Tiefe und der Zapfen des Magnetankers (bzw. des Polteils) eine axiale Länge von jeweils etwa 1,5 mm besitzen, wobei der Topf einen Innendurchmesser von über 8 mm und der Zapfen einen demgegenüber reduzierten Außendurchmesser von unter 8 mm besitzen, wobei zwischen dem Polteil und dem Magnetanker sowohl axial als auch radial ein Remanenzabstand von weniger als 0,3 mm, vorzugsweise nicht mehr als 0,2 mm verbleiben. Der Außendurchmesser des Magnetankers beträgt bei dieser Ausführung vorzugsweise mindestens 9 mm.

Auch bei der Rückwärtsbewegung des Magnetankers in seine Ausganslage, beispielsweise aufgrund der Federkraft einer Rückstellfeder, lassen sich die Aufprallgeräusche beim Erreichen der Endlage des Magnetankers reduzieren, wenn die Bestromung der Spule während der Bewegung des Magnetankers von seiner Endlage in seine Ausgangslage reduziert wird, wobei diese Reduzierung wiederum vorzugsweise kontinuierlich und besonders bevorzugt linear erfolgt, und gerade nicht schlagartig auf Null gesetzt wird. Dadurch, dass die Bestromung nicht unmittelbar auf Null gesetzt wird, sondern nach und nach reduziert wird, bremst die Magnetkraft die Rückwärtsbewegung des Magnetankers zunächst stark und im weiteren Verlauf zunehmend weniger ab, so dass die kinetische Energie der dem Magnetanker zugehörigen Baugruppe bei Erreichen der Ausgangslage entsprechend gering ist und der Aufprall in die Endlage keine oder nur wenig Geräusche erzeugt.

In Kombination mit einer Rückstellfeder ist es vorteilhaft, wenn die Bestromung der Spule so reduziert wird, dass die Magnetkraft bei Erreichen der Ausgangslage in etwa der Federkraft der Rückstellfeder entspricht. Die kinetische Energie, mit der der Magnetanker in die Ausganslage einfährt ist dann relativ gering. Die Magnetkraft liegt bei Erreichen der Ausgangslage vorteilhaft auf einem positiven Wert, welcher geringer ist als die Federkraft der Rückstellfeder.

Nachfolgend wird die Erfindung anhand der begleitenden Zeichnungen beispielhaft erläutert. Darin zeigen:
Figur 1 ein elektromagnetisch betätigtes Sitzventil gemäß einer bevorzugten Ausführung in bestromtem Zustand;
Figur 2 einen Ausschnitt aus dem Schaltventil gemäß Figur 1 in unbestromtem Zustand;
Figur 3 ein Magnetkraft-Hub-Kennlinienfeld zu dem Sitzventil aus Figur 1; und
Figur 4 eine Strom-Zeit-Kurve für die Bestromung des Magnetantriebs des Sitzventils aus Figur 1.

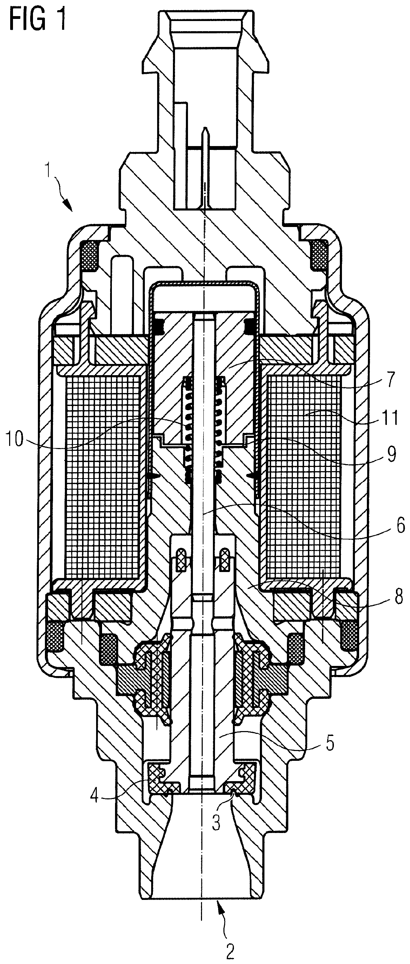

Figur 1 zeigt ein elektromagnetisches Sitzventil 1 gemäß einem bevorzugten Ausführungsbeispiel. Das Sitzventil 1 besitzt eine Durchflussöffnung 2 mit einem Dichtsitz 3, welche durch ein Dichtelement 4 verschließbar ist. Die Dichtfläche des Dichtelements 4 ist elastisch verformbar, um eine zuverlässige Abdichtung der Durchflussöffnung 2 zu gewährleisten, und wird durch einen Elastomerwerkstoff gebildet. Das Dichtelement 4 sitzt am vorderen axialen Ende eines Stößels 5, der über eine Verbindungsstange 6 mit einem Magnetanker 7 gekoppelt ist, welcher axial entlang einer zentralen Achse einer Magnetspule 11 beweglich ist. Es ist prinzipiell denkbar, das Dichtelement 4 unmittelbar am Magnetanker 7 zu befestigen. Es ist sogar denkbar, dass der Elastomerwerkstoff auf der Seite des Dichtsitzes 3 angeordnet ist und das Dichtelement 4 ohne jegliche Elastizität durch das axial vordere Ende des Magnetankers 7 selbst gebildet wird. Im dargestellten Ausführungsbeispiel sitzt der Stößel fest auf der Verbindungsstange 6, welche wiederum fest im Magnetanker 7 sitzt. Dadurch ergibt sich eine dem Magnetanker 7 zugeordnete Baugruppe bestehend aus Dichtelement 4, Stößel 5, Verbindungsstange 6 und Magnetanker 7.

Der bewegliche Magnetanker 7 ist Teil eines Eisenkreises oder magnetischen Kreises, dem auch ein ortsfestes Polteil 8 zugehört. Zwischen dem Magnetanker 7 und dem Polteil 8 liegt ein Arbeitsluftspalt 9, der es dem Magnetanker 7 ermöglicht, sich axial in Richtung auf das Polteil 8 zuzubewegen, wenn das Dichtelement 4 in seine Schließposition gebracht wird, die in Figur 1 dargestellt ist. In dieser Schließposition befindet sich der Magnetanker 7 in seiner Endlage, in welcher der Arbeitsluftspalt 9 auf einen verbleibenden Remanenzabstand von etwa 0,2 mm reduziert ist.

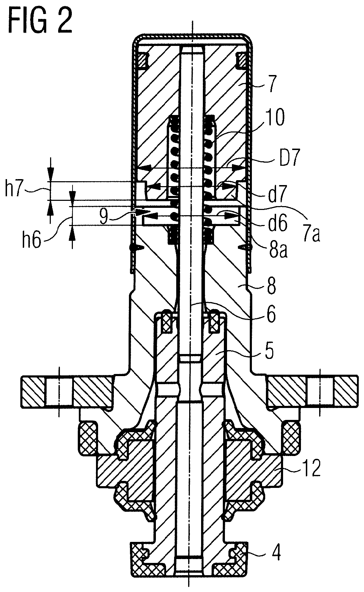

Durch elektrische Bestromung der den Magnetanker 7 und das Polteil 8 umgebenden Spule 11 wird ein den Magnetanker 7 und das Polteil 8 durchsetzender Magnetkreis in der Weise erzeugt, dass zwischen dem Poltteil 8 und dem Magnetanker 7 über den Arbeitsluftspalt 9 eine magnetische Anziehungskraft wirkt, die der mechanischen Belastung einer Rückstellfeder 10 entgegenwirkt und diese überwindet. Diese Magnetkraft hält den Magnetanker 7 in seiner in Figur 1 dargestellten Endlage und damit das Sitzventil 1 in seiner Schließstellung. Sobald die Bestromung der Magnetspule 11 auf Null oder zumindest soweit reduziert wird, dass die resultierende Magnetkraft geringer ist als die Federkraft der Rückstellfeder 10, bewegt sich der Magnetanker in seine Ausgangslage, die in der Detailansicht in Figur 2 gezeigt ist. Der Arbeitsluftspalt 9 vergrößert sich dann beispielsweise auf etwa 1,7 mm. Der "Hub" beträgt in diesem Falle somit 1,5 mm.

Die Polkontur ist speziell ausgebildet, um eine Magnetkraft-Hub-Kennlinie zu erreichen, die ausgehend von der Ausgangslage s₀ des Magnetankers 7, wie in Figur 2 gezeigt, bis zum Erreichen der Endlage s₁ des Magnetankers 7, wie in Figur 1 gezeigt, zunächst einen proportionalen, möglichst horizontalen Verlauf gefolgt von einem möglichst stark progressiv ansteigenden Verlauf annimmt. Zu diesem Zweck ist die Polkontur polteilseitig mit einer zylindrischen Stufe als zylindrischer Topf oder nahezu zylindrischer Topf 8a ausgeführt, in den der Magnetanker 7 mit einem ebenfalls zylindrischen oder zumindest nahezu zylindrischen axialen Zapfen 7a einfährt. Unter "zylindrisch" wird im Rahmen der Erfindung auch eine Abweichung von der Zylinderachse bis hin zu einer Konizität von 10° des Poltopfs 8a und/oder des Magnetankerzapfens 7a verstanden, wobei die Abweichung vorzugsweise unter 10°, besonders bevorzugt bei 5° oder darunter liegt.

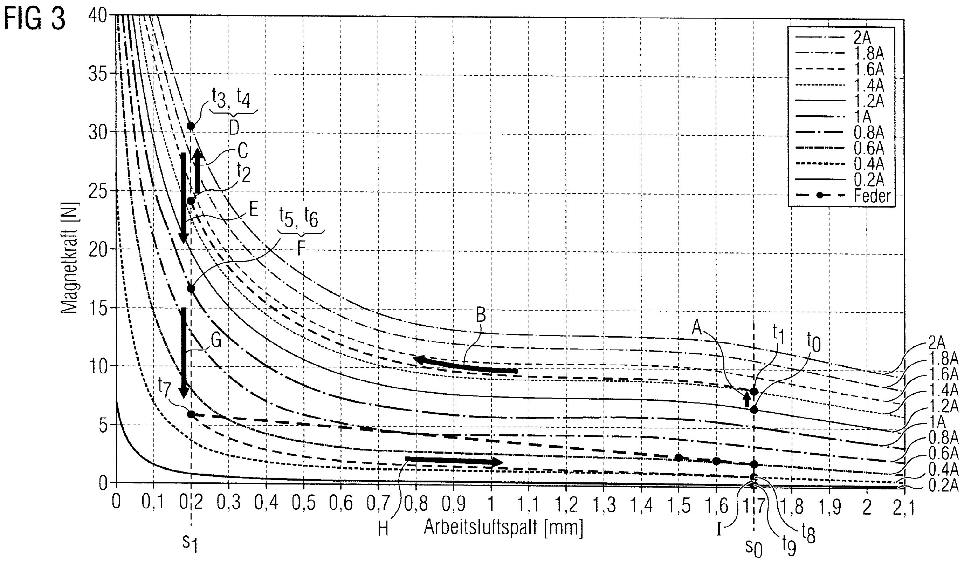

Es ergibt sich dann eine Magnetkraft-Hub-Kennlinie wie in dem Kennlinienfeld gemäß Figur 3 gezeigt, wobei diese Kennlinie mit den folgenden konkreten Pol- und Magnetankerabmessungen erzielbar ist: Die Tiefe h₆ des zylindrischen Topfs 8a des Polteils 8 und auch die axiale Länge des Zapfens 7a des Magnetankers 7 betragen jeweils 1,5 mm; der zylindrische Topf 8a des Polteils 8 besitzt einen Innendurchmesser d₆ von 8,05 mm und der Zapfen 7a des Magnetankers einen Außendurchmesser d₇ von 7,65 mm, so dass ein radialer Remanenzabstand zwischen Polteil 8 und Magnetanker 7 etwa 0,2 mm beträgt. Der Außendurchmesser D₇ des Magnetankers 7 selbst beträgt 9,23 mm, wie auch der Außendurchmesser des Polteils 8 angrenzend an den Arbeitsluftspalts 9. Für kleinere oder größere Magnetantriebe lassen sich diese Abmessungen nach unten und oben näherungsweise linear skalieren, wobei die Magnetkraft-Hub-Kennlinie durch Feinabstimmung der Dimensionen weiter angepasst werden können.

In Figur 3 ist die Magnetkraft-Hub-Kennlinie des vorbeschriebenen Magnetantriebs für unterschiedliche Bestromungen der Magnetspule dargestellt, nämlich in 0,2 Amper-Schritten von 0,2 A bis 2 A. Ebenfalls eingezeichnet ist die Federkennlinie der Rückstellfeder 10 über den Hub von s₀=1,7 mm bis si=0,2 mm. Zu erkennen ist, dass der Magnetantrieb partiell proportional verläuft, nämlich im Hubbereich von 1,7 mm bis etwa 0,7 mm oder 0,8 mm. Über den verbleibenden Hubbereich bis zur Endlage s₁=0,2 mm steigt die Magnetkraft dann progressiv an.

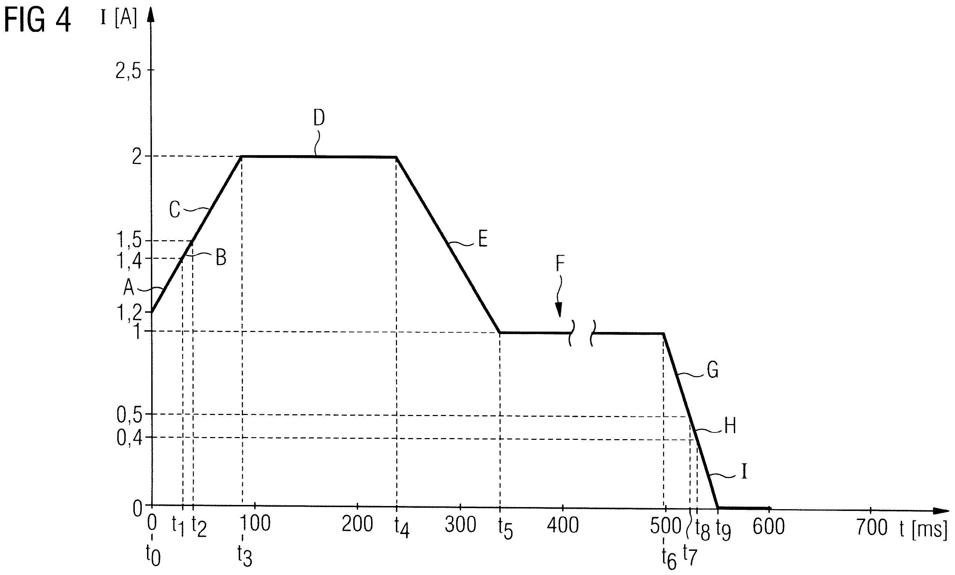

Figur 4 zeigt den Strom-Zeit-Verlauf für die Bestromung der Magnetspule 11 über einen Zyklus ausgehend von der Ausgangslage so des Magnetankers 7 bis zu seiner Endlage s₁ und wieder zurück in die Ausgangslage so. Dieser Zyklus wird nachfolgend anhand von neun Phasen A bis I erläutert, welche durch die Zeitpunkte t₀ bis t₉ definiert sind, wobei die Phase F vom Zeitpunkt t₅ bis t₆ beliebig lang sein kann. Diese Phasen A bis I und Zeitpunkte to bis t₉ sind als gestrichelte Kurve in dem Magnetkraft-Hub-Kennlinienfeld gemäß Figur 3 dargestellt, wobei die Pfeile die Richtung angeben, in welcher die gestrichelte Kurve durchlaufen wird.

In dem Zeitpunkt t₀, wenn das Sitzventil betätigt werden soll, wird die Magnetspule 11 zunächst mit einem Strom von 1,2 A bestromt (Figur 4). Der Magnetanker befindet sich dann in seiner Ausgangslage mit einem Arbeitsluftspalt von s₀=1,7 mm (Figur 3, Zeitpunkt t₀). Dann wird der Strom über einen Zeitraum von 90 ms linear auf 2 A erhöht. Dabei durchläuft der Magnetanker die drei Phasen A bis C. In der Anfangsphase A müssen zunächst die Federkraft und die Haftreibung des Dichtelements 12 (Figur 2) überwunden werden. Bis der Magnetanker seine Endlage zum Zeitpunkt t₁ verlässt, hat die Bestromung bereits einen Wert von etwa 1,4 A erreicht. Die Phase A dauert etwas über 30 ms. Anschließend bewegt sich der Magnetanker bei weiter linear ansteigender Bestromung in seine Endlage si=0,2 mm. Diese Phase B dauert etwa nur 10 ms und ist bei einer Bestromung von etwa 1,5 bis 1,7 A erreicht. Die weitere Erhöhung der Bestromung in der Phase C auf einen Wert von 2 A dient dazu, Schwingungen beim Einfahren in den elastischen Dichtsitz zu vermeiden. Zum Zeitpunkt t₃ ist nach etwa 90 ms die Stromstärke von 2 A erreicht, welche dann während der etwa 150 ms dauernden Phase D aufrechterhalten wird. Zum Zeitpunkt t₄, wenn der Dichtsitz zuverlässig geschlossen ist, wird die Bestromung auf einen niedrigeren Wert heruntergefahren, der hier bei 1 A liegt. Diese Phase E beträgt etwa 60 ms, und der Strom von 1 A genügt in der Regel, um das Ventil bei gleichzeitiger Überwindung der Federkraft der Rückstellfeder 10 und insbesondere an der Durchflussöffnung auftretenden Druckstößen zuverlässig in der Schließposition zu halten. Die Dauer der Haltephase F hängt von den Anwendungsvorgaben des Ventils ab und kann dementsprechend beliebig lang sein.

Bei der anschließenden Rückführung des Magnetankers 7 in seine Ausgangslage wird die Bestromung kontinuierlich, hier linear, auf 0A heruntergefahren, wobei der Magnetanker zunächst in seiner Endlage verharrt, bis die Magnetkraft bis auf den Wert der entgegenwirkenden Federkraft abgenommen hat, der in der Endlage etwa 6 N beträgt (Phase G, Zeitpunkte t₅ bis t₆). Erst danach fährt der Magnetanker in der Phase H (Zeitpunkte t₆ bis t₇) von seiner Endlage in seine Ausgangslage zurück, während in der Phase I (Zeitpunkte t₈ bis t₉) der Strom nur noch bis auf Null abfällt. Die kontinuierliche Reduzierung der Bestromung in der Phase H ist vorzugsweise so zu wählen, dass die Magnetkraft in etwa der Federkraft der Rückstellfeder entspricht, so dass die Rückstellfeder den Magnetanker zwar zurückbewegt, aber aufgrund der Bremswirkung durch die Magnetkraft nur wenig beschleunigt. Der Verlauf der Phase H liegt hier geringfügig unterhalb der Federkennlinie, wie in Figur 3 gezeigt. Es kann sogar sinnvoll sein, die Bestromung unmittelbar nach der Phase G, also bei Erreichen von 0,5 A, wenn der Magnetanker aufgrund des Unterschreitens der Federkraft gerade aus der Endlage s₁ abhebt, wieder auf 0,6 A zu erhöhen und dort zu halten, bis der Magnetanker seine Ausgangslage s₀ erreicht hat (vgl. Fig. 3). Durch Variation der Federsteifigkeit der Rückstellfeder 10 kann die Rückstellbewegung des Magnetankers 7 zusätzlich beeinflusst werden.

## Patentansprüche

1. Elektromagnetisch betätigtes Schaltventil (1), umfassend
- einen Magnetantrieb, umfassend eine Magnetspule (11) mit einer zentralen Achse und einen entlang der zentralen Achse um einen Hub zwischen einer Ausgangslage (s₀) und einer Endlage (s₁) beweglichen Magnetanker (7), der zusammen mit einem ortsfesten Mantel einen magnetischen Kreis bildet und bei Bestromung der Magnetspule (11) aufgrund elektromagnetischer Kräfte von seiner Ausgangslage (s₀) in seine Endlage (s₁) in Richtung auf ein Polteil (8) des ortsfesten Mantels bewegbar ist,
- eine Steuerung, mit der die Höhe der Bestromung der Magnetspule (11) steuerbar ist, und
- eine Durchflussöffnung (2) mit einem Dichtsitz (3), ein Dichtelement (4) zum Verschließen der Durchflussöffnung, wobei das Dichtelement (4) mit dem Magnetanker (7) gekoppelt ist oder durch den Magnetanker (7) gebildet wird, und eine aus einem Elastomerwerkstoff gebildete elastische Dichtfläche, welche am Dichtelement (4) oder am Dichtsitz (3) angeordnet ist, **dadurch gekennzeichnet, dass** der Magnetantrieb eine Magnetkraft-Hub-Kennlinie besitzt, die ausgehend von der Ausgangslage (s₀) des Magnetankers (7) bis hin zur Endlage (s₁) des Magnetankers (7) insgesamt steigend ist, und dass die Steuerung eingerichtet ist, die Bestromung der Spule (11) während der Bewegung des Magnetankers (7) zwischen seiner Ausgangslage (s₀) und seiner Endlage (s₁) zu erhöhen oder zu reduzieren oder sowohl zu erhöhen als auch zu reduzieren,
wobei die Steuerung eingerichtet ist, die Bestromung der Spule (11) während der Bewegung des Magnetankers (7) von seiner Ausgangslage (s₀) in seine Endlage (s₁) kontinuierlich zu erhöhen.

2. Schaltventil nach Anspruch 1, wobei die Magnetkraft-Hub-Kennlinie vor Erreichen der Endlage (s₁) des Magnetankers (7) progressiv ansteigt.

3. Schaltventil nach Anspruch 1 oder 2, wobei die Magnetkraft-Hub-Kennlinie von der Ausgangslage (s₀) des Magnetankers bis hin zur Endlage (s₁) des Magnetankers einen proportionalen Verlauf, gefolgt von einem progressiven Verlauf aufweist.

4. Schaltventil nach Anspruch 3, wobei sich der proportionale Verlauf der Magnetkraft-Hub-Kennlinie über mindestens 50 % des Hubs erstreckt.

5. Schaltventil nach Anspruch 3 oder 4, wobei sich die Magnetkraft im Bereich des proportionalen Verlaufs der Magnetkraft-Hub-Kennlinie um maximal 20 % ändert.

6. Schaltventil nach einem der Ansprüche 1 bis 5, wobei das Polteil (8) des ortsfesten Mantels einen zylindrischen Topf (8a) aufweist, in den der Magnetanker (7) mit einem axialen, vorzugsweise ebenfalls zylindrischen, Zapfen eintaucht, oder umgekehrt der Magnetanker den Topf und das Polteil den Zapfen aufweist.

7. Schaltventil nach Anspruch 6, wobei der Topf (8a) des Polteils (8) eine Tiefe h₆ und der Zapfen (7a) des Magnetankers (7) eine axiale Länge (h₇) von jeweils 1,5 mm, der Topf (8a) des Polteils (8) einen Innendurchmesser (d₆) von mehr als 8 mm und der Zapfen (7a) des Magnetankers (7) einen Außendurchmesser (D₇) von weniger als 8 mm, bei einem Außendurchmesser (D₇) des Magnetankers (7) von mindestens 9 mm, oder ein entsprechendes Vielfaches der vorgenannten Werte, aufweisen.

8. Schaltventil nach Anspruch 18, wobei die Steuerung eingerichtet ist, die Bestromung der Spule (11) während der Bewegung des Magnetankers (7) von seiner Ausgangslage (s₀) in seine Endlage (s₁) linear zu erhöhen.

9. Schaltventil nach einem der Ansprüche 1 bis 89, wobei die Steuerung eingerichtet ist, die Bestromung der Spule (11) nach Erreichen der Endlage des Magnetankers (7) weiter zu erhöhen.

10. Schaltventil nach einem der Ansprüche 1 bis 9, wobei die Steuerung eingerichtet ist, die Bestromung der Spule (11) nach Erreichen der Endlage des Magnetankers (7) auf einen konstanten Wert zu senken.

11. Schaltventil nach einem der Ansprüche 1 bis 10, wobei die Steuerung eingerichtet ist, die Bestromung der Spule (11) während der Bewegung des Magnetankers (7) von seiner Endlage (s₁) in seine Ausgangslage (s₀) zu reduzieren.

12. Schaltventil nach einem der Ansprüche 1 bis 11, wobei die Steuerung eingerichtet ist, die Bestromung der Spule (11) so zu reduzieren, dass die Magnetkraft bei Erreichen des Magnetankers (7) in seiner Ausgangslage (s₀) auf einem positiven Wert liegt, welcher geringer ist als die Federkraft einer mit dem Magnetanker gekoppelten Rückstellfeder (10).

13. Schaltventil nach einem der Ansprüche 1 bis 12, wobei das Ventil ein druckausgeglichenes Sitzventil ist.

## Claims

1. An electromagnetically operated switch valve (1), comprising:
- a magnetic drive, comprising a magnetic coil (11) with a central axis and a magnetic armature (7) movable along the central axis by a stroke between an initial position (s₀) and an end position (s₁), said armature forming, together with a stationary casing, a magnetic circuit and being movable from its initial position (s₀) into its end position (s₁) toward a pole member (8) of the stationary casing due to electromagnetic forces upon energizing of the magnetic coil (11),
- a control with which the level of the energizing of the magnetic coil (11) is controllable, and
- a flow opening (2) with a sealing seat (3), a sealing element (4) for closing the flow opening, wherein the sealing element (4) is coupled with the magnetic armature (7) or formed by the magnetic armature (7), and an elastic sealing area formed from an elastomeric material arranged on the sealing element (4) or on the sealing seat (3),
**characterized in that** the magnetic drive possesses a magnetic force-stroke curve which altogether tends upwards starting out from the initial position (s₀) of the magnetic armature (7) up to the end position (s₁) of the magnetic armature, and that the control is set up to increase or reduce or both increase and reduce the energizing of the coil (11) during the motion of the magnetic armature (7) between its initial position (s₀) and its end position (s₁),
wherein the control is set up to increase the energizing of the coil (11) continuously during the motion of the magnetic armature (7) from its initial position (s₀) into its end position (s₁).

2. The switch valve according to claim 1, wherein the magnetic force-stroke curve rises progressively before reaching of the end position (s₁) of the magnetic armature (7).

3. The switch valve according to claim 1 or 2, wherein the magnetic force-stroke curve has a proportional course, followed by a progressive course, from the initial position (s₀) of the magnetic armature up to the end position (s₁) of the magnetic armature.

4. The switch valve according to claim 3, wherein the proportional course of the magnetic force-stroke curve extends over at least 50% of the stroke.

5. The switch valve according to claim 3 or 4, wherein the magnetic force changes by at most 20% in the region of the proportional course of the magnetic force-stroke curve.

6. The switch valve according to any of claims 1 to 5, wherein the pole member (8) of the stationary casing has a cylindrical well (8a) which the magnetic armature (7) penetrates with an axial, preferably likewise cylindrical, pin or, vice-versa, the magnetic armature has the well and the pole member the pin.

7. The switch valve according to claim 6, wherein the well (8a) of the pole member (8) has a depth h₆ and the pin (7a) of the magnetic armature (7) an axial length (h₇) of respectively 1.5 mm, the well (8a) of the pole member (8) an inner diameter (d₆) of more than 8 mm and the pin (7a) of the magnetic armature (7) an outer diameter (D₇) of less than 8 mm, at an outer diameter (D₇) of the magnetic armature (7) of at least 9 mm, or a corresponding multiple of the above-mentioned values.

8. The switch valve according to claim 1, wherein the control is set up to increase the energizing of the coil (11) linearly during the motion of the magnetic armature (7) from its initial position (s₀) into its end position (s₁).

9. The switch valve according to any of claims 1 to 8, wherein the control is set up to increase the energizing of the coil (11) further after reaching of the end position of the magnetic armature (7).

10. The switch valve according to any of claims 1 to 9, wherein the control is set up to lower the energizing of the coil (11) to a constant value after reaching of the end position of the magnetic armature (7).

11. The switch valve according to any of claims 1 to 10, wherein the control is set up to reduce the energizing of the coil (11) during the motion of the magnetic armature (7) from its end position (s₁) into its initial position (s₀).

12. The switch valve according to any of claims 1 to 11, wherein the control is set up to reduce the energizing of the coil (11) such that when the magnetic armature (7) reaches its initial position (s₀) the magnetic force is at a positive value which is lower than the spring force of a return spring (10) coupled with the magnetic armature.

13. The switch valve according to any of claims 1 to 12, wherein the valve is a pressure-compensated seat valve.

## Revendications

1. Soupape de commutation (1) à actionnement électromagnétique, comprenant
- un entraînement magnétique comprenant une bobine magnétique (11) ayant un axe central et un induit magnétique (7) qui, le long de l'axe central, est déplaçable d'une course entre une position initiale (s₀) et une position finale (s₁) et qui, conjointement avec une gaine stationnaire, constitue un circuit magnétique et, lors d'une alimentation de la bobine magnétique (11), en raison de forces électromagnétiques, peut être déplacé de sa position initiale (s₀) à sa position finale (s₁) en direction d'une pièce polaire (8) de la gaine stationnaire,
- une commande avec laquelle le niveau de l'alimentation en courant de la bobine magnétique (11) peut être commandé, et
- un orifice d'écoulement (2) doté d'un siège d'étanchéité (3), un élément d'étanchéité (4) destiné à la fermeture de l'orifice d'écoulement, cependant que l'élément d'étanchéité (4) est couplé à l'induit magnétique (7) ou est constitué par l'induit magnétique (7), et une surface d'étanchéité constituée à partir d'une matière élastomère et agencée à l'élément d'étanchéité (4) ou au siège d'étanchéité (3),
**caractérisée en ce que** l'entraînement magnétique possède une courbe caractéristique force magnétique-course qui, depuis la position initiale (s₀) de l'induit magnétique (7) jusqu'à la position finale (s₁) de l'induit magnétique (7), est dans l'ensemble croissante, et **en ce que** la commande est conçue pour, durant le déplacement de l'induit magnétique (7) entre sa position initiale (s₀) et une position finale (s₁), augmenter ou réduire ou bien tant augmenter que réduire l'alimentation de la bobine (11),
cependant que la commande est conçue pour, durant le déplacement de l'induit magnétique (7) de sa position initiale (S₀) à sa position finale (S₁), augmenter continuellement l'alimentation de la bobine (11).

2. Soupape de commutation selon la revendication 1, cependant que la courbe caractéristique force magnétique-course croît progressivement avant l'atteinte de la position finale (Si) de l'induit magnétique (7).

3. Soupape de commutation selon la revendication 1 ou 2, cependant que la courbe caractéristique force magnétique-course présente, de la position initiale (s₀) de l'induit magnétique à la position finale (s₁) de l'induit magnétique, un tracé proportionnel suivi d'un tracé progressif.

4. Soupape de commutation selon la revendication 3, cependant que le tracé proportionnel de la courbe caractéristique force magnétique-course s'étend sur au moins 50 % de la course.

5. Soupape de commutation selon la revendication 3 ou 4, cependant que la force magnétique, dans la zone du tracé proportionnel de la courbe caractéristique force magnétique-course, se modifie d'au maximum 20 %.

6. Soupape de commutation selon une des revendications de 1 à 5, cependant que la pièce polaire (8) de la gaine stationnaire comporte un pot cylindrique (8a) dans lequel l'induit magnétique (7) plonge par une broche axiale, de préférence également cylindrique, ou que, inversement, l'induit magnétique comporte le pot et la pièce polaire la broche.

7. Soupape de commutation selon la revendication 6, cependant que le pot (8a) de la pièce polaire (8) présente une profondeur h₆ et la broche (7a) de l'induit magnétique (7) une longueur axiale (h₇) de respectivement 1,5 mm, le pot (8a) de la pièce polaire (8) un diamètre intérieur (d₆) de plus de 8 mm et la broche (7a) de l'induit magnétique (7) un diamètre extérieur (D₇) de moins de 8 mm pour un diamètre extérieur (D₇) de l'induit magnétique (7) inférieur à 9 mm, ou un multiple correspondant des valeurs précitées.

8. Soupape de commutation selon la revendication 1, cependant que la commande est conçue pour, durant le déplacement de l'induit magnétique (7) de sa position initiale (s₀) à sa position finale (s₁), augmenter linéairement l'alimentation de la bobine (11).

9. Soupape de commutation selon une des revendications de 1 à 8, cependant que la commande est conçue pour, après atteinte de la position finale de l'induit magnétique (7), augmenter encore l'alimentation de la bobine (11).

10. Soupape de commutation selon une des revendications de 1 à 9, cependant que la commande est conçue pour, après atteinte de la position finale de l'induit magnétique (7), abaisser à une valeur constante l'alimentation de la bobine (11).

11. Soupape de commutation selon une des revendications de 1 à 10, cependant que la commande est conçue pour, durant le déplacement de l'induit magnétique (7) de sa position finale (s₁) à sa position initiale (s₀), réduire l'alimentation de la bobine (11).

12. Soupape de commutation selon une des revendications de 1 à 11, cependant que la commande est conçue pour réduire de telle manière l'alimentation de la bobine (11) que la force magnétique, lors de l'arrivée de l'induit magnétique (7) dans sa position initiale (s₀), se situe à une valeur positive inférieure à la force de ressort d'un ressort de rappel (10) couplé à l'induit magnétique.

13. Soupape de commutation selon une des revendications de 1 à 12, cependant que la soupape est une soupape à siège équilibrée en pression.
